# EUROPÄISCHE PATENTSCHRIFT

(11) **EP 2 598 707 B1**
(45) Veröffentlichungstag und Bekanntmachung des Hinweises auf die Patenterteilung: **08.07.2015**
(21) Anmeldenummer: 11722080.6
(22) Anmeldetag: 31.05.2011
(51) Int. Cl.: F16H 1/16, F16H 1/22, F16D 7/02, F16H 35/10, E05F 15/63

(54) **VERSTELLANTRIEB MIT INTEGRIERTEM ÜBERLASTSCHUTZ**
ADJUSTMENT DRIVE WITH AN INTEGRATED OVERLOAD PROTECTOR
ENTRAÎNEMENT DE RÉGLAGE À PROTECTION DE SURCHARGE INTÉGRÉE

(30) Priorität: 29.07.2010 DE 102010038596
(43) Veröffentlichungstag der Anmeldung: 05.06.2013
(73) Patentinhaber: Robert Bosch GmbH, 70442 Stuttgart (DE)
(72) Erfinder: OBERLE, Hans-Juergen, 76437 Rastatt (DE); BRAUN, Roland, 77815 Buehl (DE); BRAUN, Wilhelm, 77815 Buehl (DE)
(86) Internationale Anmeldenummer: PCT/EP2011/058872
(87) Internationale Veröffentlichungsnummer: WO 2012/013394

(56) Entgegenhaltungen:
- EP-A1- 0 440 819
- EP-A2- 2 196 612
- WO-A1-03/036119

## Beschreibung

### Stand der Technik

Die vorliegende Erfindung betrifft einen Verstellantrieb, insbesondere eines Fahrzeugs, die zum Antrieb einer Komponente vorgesehen ist, mit einer Antriebseinheit.

In Fahrzeugen, insbesondere in Kraftfahrzeugen, wird die Bedienung von Fahrzeugkomponenten und der Komfort für den Fahrgast immer mehr dadurch vereinfacht, dass die Fahrzeugkomponenten automatisiert werden. Dafür werden Verstellantriebe benötigt, die auch in unzugänglichen Bereichen des Fahrzeugs für Verstellaufgaben, Verriegel- und Entriegelaufgaben und Positionieraufgaben verwendbar sind. Aufgrund des geringen zur Verfügung stehenden Bauraums sollen diese Verstellantriebe möglichst klein sein.

Zum Verstellen von Komponenten, beispielsweise einer Heckklappe, eines Schiebedachs oder zur Höhenverstellung oder Neigungsverstellung eines Sitzes, werden häufig Verstellantriebe benötigt, die eine hohe Untersetzung aufweisen und ein hohes Drehmoment übertragen. Solche Komponenten, beispielsweie die Heckklappe oder eine Fahrzeugtür, sind oftmals auch manuell bedienbar.

Jedoch kann das Getriebe des Verstellantriebs und/oder die Heckklappe oder Fahrzeugtür während des automatischen Verstellens der Komponente mittels des Verstellantriebs bei einer gleichzeitig erfolgenden ruckartigen manuellen Bedienung oder einem Festhalten der Komponente, beispielsweise bei einem Öffnen oder Schließen einer Heckklappe oder einer Fahrzeugtür, oder bei einem Festhalten einer solchen automatisch öffnenden oder schließenden Heckklappe oder Farzeugtür, beschädigt oder sogar zerstört werden.

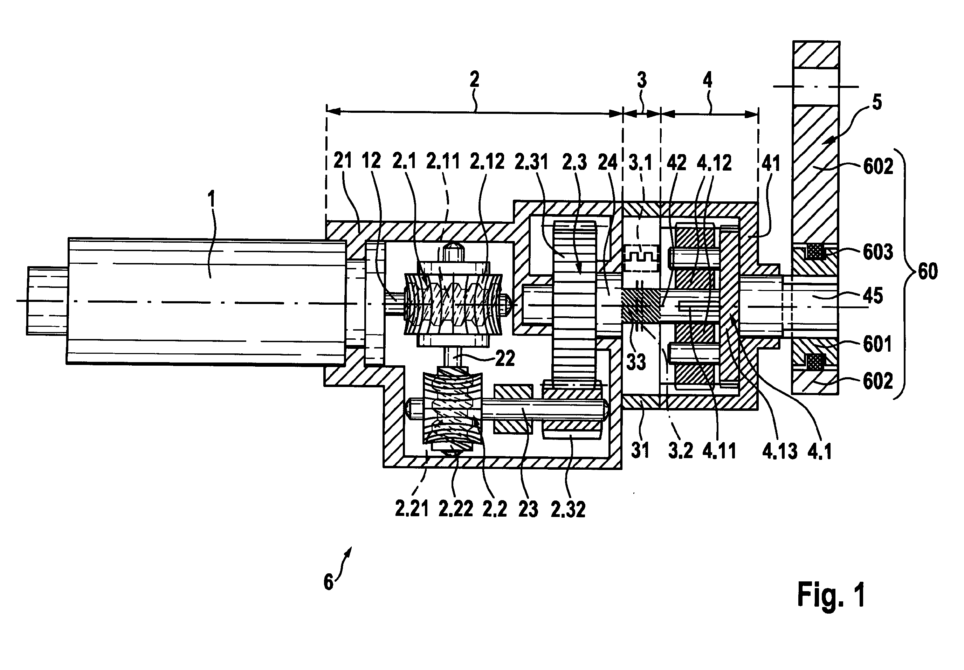

Um eine solche Beschädigung zu verhindern, ist es bekannt, die Komponente hinter oder an einer Rutschkupplung des Verstellantriebs anzuordnen. Die Fig. 1 zeigt einen Verstellantrieb 6 zum Antrieb einer Komponente 5 nach dem Stand der Technik. Als Komponente 5 ist hier ein Hebel gezeigt, an dem beispielsweise eine Fahrzeugtür oder eine Heckklappe angeordnet ist. Die Rutschkupplung 60 ist an einer zweiten Abtriebswelle 45 des Verstellantriebs 6 vorgesehen. Die Rutschkupplung ermöglicht bei einem Überschreiten eines auf die Heckklappe beziehungsweise der Hebel beaufschlagten Drehmomentes eine Relativbewegung zwischen dem Hebel und einem drehfest an der zweiten Abtriebswelle angeordneten Innenring 601, so dass der Innenring im Hebel durchrutscht.

Weiterhin ist es bekannt, eine Rutschkupplung in den Verstellantrieb zu integrieren. Ein solcher Verstellantrieb 6 ist in der deutschen Patentanmeldung mit dem Aktenzeichen 102009055412.2 offenbart, die einen Verstellantrieb mit einer Antriebseinheit 2 und einer Abtriebseinheit 4 zeigt, zwischen die eine modular in den Verstellantrieb 6 integrierbare Zwischeneinheit 3 vorgesehen ist, welche eine Rutschkupplung 3.2 umfasst.

Aus der WO-A-03/036119 ist ein gattungsgemäßer Verstellantrieb bekannt.

### Offenbarung der Erfindung

Aufgabe der Erfindung ist es, einen Verstellantrieb zum Antrieb einer sowohl mittels des Verstellantriebs als auch manuell bedienbaren Komponente zu schaffen, der gegenüber dem Stand der Technik verbessert ist, und der insbesondere weniger Bauraum erfordert und kostengünstiger herstellbar ist.

Die Aufgabe wird gelöst mit einem Verstellantrieb des Anspruchs 1. Der Verstellantrieb ist geeignet für eine sowohl mittels des Verstellantriebs als auch manuell bedienbare Komponente, insbesondere eines Kraftfahrzeugs, wobei der Verstellantrieb einen Antrieb sowie eine Antriebseinheit umfasst, wobei der Antrieb zum Antreiben der Antriebseinheit, und die Antriebseinheit zum Untersetzen einer Drehzahl des Antriebs vorgesehen ist, wobei die Antriebseinheit ein Getriebebauteil umfasst, in das ein Überlastschutz integriert ist.

Der Überlastschutz ist erfindungsgemäß in ein Getriebebauteil der Antriebseinheit integriert. Im Vergleich zu einem an der der Komponente zugewandten Seite des Verstellantriebs angeordneten Überlastschutz, sowie im Vergleich zu einem modular in den Verstellantrieb integrierten Überlastschutz benötigt der erfindungsgemäße Verstellantrieb mit dem in das Getriebebauteil integrierten Überlastschutz keinen zusätzlichen Bauraum für den Überlastschutz, so dass er insgesamt kleiner baubar ist.

Außerdem ist der Überlastschutz im Vergleich zu einem an der Komponente angeordneten Überlastschutz, sowie im Vergleich zu einem an der der Komponente zugewandten Seite des Verstellantriebs angeordneten Überlastschutz im Rahmen einer Vorfertigung des Verstellantriebs bereits in diesen einbaubar, so dass er nicht mehr beim Einbau des Verstellantriebs an diesen und/oder an die Komponente angebaut werden muss. Beispielsweise im Rahmen einer Kraftfahrzeugfertigung ist dadurch die für den Einbau des Verstellantriebs benötigte Zeit verringert.

Als Antrieb wird bevorzugt ein Elektromotor verwendet. Jedoch ist auch ein anderer zur Durchführung mechanischer Arbeit vorgesehener Antrieb verwendbar.

Die Antriebseinheit umfasst bevorzugt zumindest eine erste Getriebestufe mit einer ersten Abtriebswelle, wobei der Überlastschutz an der ersten Abtriebswelle angeordnet ist. Dabei ist die erste Abtriebswelle vorzugsweise an der der Komponente zugewandten Seite der Antriebseinheit angeordnet. Weiterhin bevorzugt ist der Antrieb an der der Komponente abgewandten Seite der Antriebseinheit angeordnet. Dadurch schützt der Überlastschutz die Antriebseinheit sowie den Antrieb vor Beschädigungen durch eine zu große auf die erste Abtriebswelle wirkende Kraft.

Als Überlastschutz sind verschiedene Ausführungsformen von Rutschkupplungen bevorzugt, beispielsweise ein Überlastschutz mit einem Torsionsring oder eine Rutschkupplung mit einer Tellerfeder, einer Schlingfeder, einer Druckfeder oder weitere. Ebenfalls bevorzugt ist aber auch eine elektronisch gesteuerte Magnetkupplung. Es sind auch Anwendungen denkbar, in denen der Überlastschutz durch eine Sollbruchstelle gebildet ist.

Die erste Getriebestufe ist ein Stirnradgetriebe mit einem Stirnrad, wobei das Stirnrad das Getriebebauteil ist. Das Stirnradgetriebe ermöglicht zum Einen die Untersetzung der Drehzahl des Antriebs, so dass die Abtriebsdrehzahl der ersten Abtriebswelle kleiner ist, als die Drehzahl des Antriebs. Weiterhin ist es bevorzugt, dass der Einfluss von Querkräften auf den Überlastschutz möglichst klein ist, da der Überlastschutz bevorzugt reibungsabhängig arbeitet. Daher ist eine Ausführungsform des Überlastschutzes besonders bevorzugt, bei der der Überlastschutz zur Aufnahme von radialen Kräften vorgesehen ist.

Die bevorzugte Ausführungsform des Stirnrades als Getriebebauteil ermöglicht eine solche Anordnung mit sehr wenigen Bauteilen. Und zwar weist das Getriebebauteil in einer besonders bevorzugten Ausführungsform einen ersten Teil, der drehfest an der ersten Abtriebswelle angeordnet ist, auf, sowie einen zweiten Teil mit einer Verzahnung, und es umfasst weiterhin ein Kupplungsmittel, das zwischen dem ersten Teil und dem zweiten Teil angeordnet und zum Kuppeln des zweiten Teils an das erste Teil vorgesehen ist.

Der erste Teil ist als Innenring ausgebildet. In einer bevorzugten Ausführungsform ist der Innenring einstückig mit der ersten Abtriebswelle gefertigt, so dass der bei einer herkömmlichen Rutschkupplung üblicherweise separat gefertigte Innenring einsparbar ist. Der zweite Teil ist bevorzugt als Außenring ausgebildet, wobei die Verzahnung die Außenverzahnung des Stirnrades ist. Das Kupplungsmittel ist bevorzugt als Feder, ganz besonders bevorzugt als Toleranzring ausgebildet. Die Ausführungsform als Toleranzring ermöglicht eine über den gesamten Umfang des Toleranzringes sehr gleichmäßige Übertragung des Drehmomentes in radialer Richtung.

Grundsätzlich ist aber auch eine Ausführungsform des Überlastschutzes bevorzugt, bei der diese zur Aufnahme von Axialkräften vorgesehen ist. Ein solcher Überlastschutz ist beispielsweise durch eine Rutschkupplung mit einer Tellerfeder oder einer Druckfeder als Kupplungsmittel realisierbar, benötigt jedoch mehr Bauteile.

In einer bevorzugten Ausführungsform umfasst die Antriebseinheit weitere Getriebestufen, beispielsweise ein oder mehrere Schneckengetriebe, die zwischen der ersten Getriebestufe und dem Antrieb angeordnet sind. In einer ebenfalls bevorzugten Ausführungsform sind ein erstes Schneckengetriebe sowie ein zweites Schneckengetriebe als ein Doppelschneckengetriebe zwischen dem Antrieb und der ersten Getriebestufe hintereinander geschaltet. Die Kombination zweier Schneckengetriebe ermöglicht eine sehr hohe Drehzahlverringerung auf sehr kleinem Bauraum.

Der Verstellantrieb umfasst weiterhin bevorzugt eine Abtriebseinheit, die vorgesehen ist, um ein Abtriebsdrehmoment der Antriebseinheit zu untersetzen. In dieser Ausführungsform ist es bevorzugt, dass die erste Abtriebswelle zum Antrieb der Abtriebseinheit vorgesehen ist, und sich bei angetriebener Antriebseinheit mit dem Abtriebsdrehmoment dreht. Weiterhin ist es in dieser Ausführungsform bevorzugt, dass die Abtriebseinheit eine zweite Abtriebswelle zum Antrieb der Komponente umfasst.

Die Abtriebseinheit ist bevorzugt ein Planetengetriebe. Je nach Anforderung ist aber auch eine anderes Getriebe für die Abtriebseinheit verwendbar, insbesondere wenn eine geringere Untersetzung benötigt wird. Bevorzugt weist das Planetengetriebe ein Sonnenrad auf, welches an die erste Abtriebswelle adaptierbar ist. Diese Anordnung ermöglicht eine hohe Untersetzung sowie die koaxiale Anordnung der ersten Abtriebswelle und der zweiten Abtriebswelle des Planetengetriebes.

In dieser Ausführungsform ist der Überlastschutz daher vor der die Abtriebsdrehzahl der Antriebseinheit untersetzenden Abtriebseinheit angeordnet, also auf einer der Komponente abgewandten Seite der Abtriebseinheit. Gegenüber einem an einer der Komponente zugewandten Seite der Abtriebseinheit angeordneten Überlastschutz ist der an der der Komponente abgewandten Seite der Abtriebseinheit angeordnete Überlastschutz aufgrund der geringeren Untersetzung für erheblich kleinere Lasten auslegbar. Somit ist für diesen Verstellantrieb ein Überlastschutz mit einem Nenndrehmoment verwendbar, welches gegenüber dem Nenndrehmoment des auf der der Komponente zugewandten Seite der Abtriebseinheit angeordneten Überlastschutzes verringert ist. Dadurch reduziert sich in Bezug auf das Abtriebsdrehmoment an der Komponente auch die Toleranz des Durchrutschmomentes, so dass ein Überlastschutz verwendbar ist, der bezüglich seiner Ausmaße kleiner und/oder bezüglich seines Gewichtes leichter ist. Im Vergleich zu einem Überlastschutz, der an der der Komponente abgewandten Seite angeordnet ist, ist daher ein kostengünstigerer Überlastschutz verwendbar.

Außerdem ist es bevorzugt, dass eine die Antriebseinheit antreibende Antriebswelle, die erste Abtriebswelle der Antriebseinheit, sowie gegebenenfalls die zweite Abtriebswelle einer Abtriebseinheit, die zum Antrieb der Komponente vorgesehen ist, koaxial angeordnet sind.

Dies ist bevorzugt mit der als Stirnradgetriebe ausgeführten ersten Getriebestufe der Antriebseinheit realisiert. Dabei umfasst das Stirnradgetriebe mit dem auf der ersten Abtriebswelle angeordneten Stirnrad bevorzugt ein Zahnrad, welches an einer insbesondere achsparallel zur ersten Antriebswelle angeordneten Zwischenwelle angeordnet ist, und welches mit dem Stirnrad in Eingriff ist. Die erste Abtriebswelle der Antriebseinheit treibt in dieser Ausführungsform bevorzugt eine weitere zwischen dem Antrieb und der ersten Getriebestufe angeordnete Getriebestufe an, dessen Abtrieb die Zwischenwelle antreibt. Es ist aber weiterhin bevorzugt, dass diese weitere Getriebestufe noch eine oder mehrere weitere zwischengeschaltete Getriebestufen antreibt, deren letzte Getriebestufe die Zwischenwelle antreibt.

Vorzugsweise ist die Antriebseinheit in einem ersten Gehäuseteil angeordnet, wobei die Abtriebseinheit in einem zweiten Gehäuseteil angeordnet ist. In den Gehäuseteilen sind die zur jeweiligen Einheit zugeordneten Getriebeteile gelagert und werden durch die Gehäuseteile gegen das Eindringen von Schmutz und Feuchtigkeit geschützt.

Im Folgenden wird die Erfindung anhand von Figuren beschrieben. Die Figuren sind lediglich beispielhaft und schränken den allgemeinen Erfindungsgedanken nicht ein.
- **Fig. 1**: zeigt schematisch einen Verstellantrieb gemäß dem Stand der Technik, der zum Antrieb einer Komponente vorgesehen ist,
- **Fig. 2**: zeigt schematisch einen erfindungsgemäßen Verstellantrieb, der zum Antrieb der Komponente vorgesehen ist, und
- **Fig. 3**: zeigt ein Stirnrad des Verstellantriebs der **Fig. 2** in einer vergrößerten Ansicht.

**Fig. 1** zeigt schematisch einen Verstellabtrieb 6 gemäß dem Stand der Technik. Der Verstellantrieb 6 umfasst eine Antriebseinheit 2, die eine Antriebswelle 12 aufweist, welche mittels eines Elektromotors 1 mit einer Drehzahl antreibbar ist.

An der Antriebswelle 12 ist eine erste Schnecke 2.11 eines ersten Schneckengetriebes 2.1 angeordnet, welches mit einem ersten Schneckengetrieberad 2.12 des ersten Schneckengetriebes 2.1 zusammenwirkt. Das erste Schneckengetrieberad 2.12 ist an einer Schneckenwelle 22 angeordnet, die im Wesentlichen quer zur Antriebswelle 12 angeordnet ist.

An der Schneckenwelle 22 ist eine zweite Schnecke 2.21 eines zweiten Schneckengetriebes 2.2 angeordnet, welches mit einem zweiten Schneckengetrieberad 2.22 des zweiten Schneckengetriebes 2.2 zusammenwirkt, das an einer Zwischenwelle 23 angeordnet ist. Die Zwischenwelle 23 ist im Wesentlichen quer zur Schneckenwelle 22, und somit im Wesentlichen achsparallel der Antriebswelle 12 angeordnet.

Das erste Schneckengetriebe 2.1 und das zweite Schneckengetriebe 2.2 sind daher zu einem Doppelschneckengetriebe hintereinander geschaltet.

Bei Antrieb der Antriebswelle 12 wird über das erste Schneckengetriebe 2.1 die Schneckenwelle 22 angetrieben, die ihrerseits über das zweite Schneckengetriebe 2.2 die Zwischenwelle 23 antreibt.

An der Zwischenwelle 23 ist ein Zahnrad 2.32 angeordnet, welches mit einem Stirnrad 2.31 zusammenwirkt, und gemeinsam mit diesem ein Stirnradgetriebe 2.3 bildet. Das Stirnrad 2.31 ist an einer ersten Abtriebswelle 24 der Antriebseinheit 2 angeordnet. Diese Anordnung ermöglicht, dass die erste Abtriebswelle 24 im Wesentlichen koaxial zur Antriebswelle 12 angeordnet ist. Bei Antrieb der Zwischenwelle 23 wird das Zahnrad 2.32 angetrieben, das in Eingriff mit dem Stirnrad 2.31 des Stirnradgetriebes 2.3 ist, so dass das Stirnrad 2.31 angetrieben wird. Dadurch wird die erste Abtriebswelle 24 angetrieben.

Das Stirnradgetriebe 2.3 ist eine erste Getriebestufe der Antriebseinheit 2, wobei das erste und das zweite Schneckengetriebe 2.1, 2.2 weitere zwischen dem Antrieb 1 und der ersten Getriebestufe 2.3 angeordnete Getriebestufen sind. Jede der hier gezeigten Getriebestufen ermöglicht eine Untersetzung der Drehzahl der Antriebswelle.

In der hier dargestellten Ausführungsform des Verstellantriebs 6 ist an die erste Abtriebswelle 24 beispielhaft eine Zwischeneinheit 3 adaptiert. Die Zwischeneinheit 3 umfasst beispielsweise einen Sensor 3.1 und/oder weitere Zusatzfunktionen 3.2. Sie ist den Anforderungen des Verstellantriebs entsprechend modular zwischen die Antriebseinheit und eine Abtriebseinheit adaptierbar und kein zwingender Bestandteil des Verstellantriebs.

Die Zwischeneinheit 3 weist eine Verbindungswelle 33 auf, die mit ihrer der Antriebseinheit 2 zugewandten Seite an die erste Abtriebswelle 24 der Antriebseinheit 2 adaptierbar ist, wobei die Abtriebseinheit 4 an ihrer der Antriebseinheit 2 abgewandten Seite adaptierbar ist.

Die Abtriebseinheit 4 des Verstellantriebs 6 weist ein Planetengetriebe 4.1 auf. Das Planetengetriebe 4.1 umfasst ein Sonnenrad 4.11, das hier an die Zwischenwelle 33 der Zwischeneinheit 3 adaptiert und von dieser antreibbar ist. Das Planetengetriebe 4.1 umfasst Planetenräder 4.12, die mittels eines Planetenradträgers 4.13 miteinander verbunden sind. Am Planetenradträger 4.13 ist eine zweite Abtriebswelle 45 angeordnet, die koaxial zum Sonnenrad 4.11 und zur ersten Abtriebswelle 24 angeordnet ist.

Bei Antrieb des Sonnenrades 4.11 werden die Planetenräder 4.12 angetrieben, so dass sich der Planetenradträger 4.13 dreht. Dadurch dreht sich die am Planetenträger 4.13 angeordnete zweite Abtriebswelle 45.

Das Sonnenrad 4.11 des Planetengetriebes 4.1 der Abtriebseinheit 4 ist auch direkt an die erste Abtriebswelle 24 adaptierbar, wenn die in der Zwischeneinheit 3 integrierten Funktionen nicht benötigt werden.

Außerdem ist der Verstellantrieb 6 auch ohne die Abtriebseinheit 4 zum Antrieb einer Komponente 5 verwendbar, wenn auch die von der Abtriebseinheit 4 bereitgestellten Anforderungen nicht benötigt werden. Daher ist sowohl die erste Abtriebswelle 24 als auch die zweite Abtriebswelle 45 zum Antrieb der Komponente 5 verwendbar.

Die Antriebseinheit 2 weist ein erstes Gehäuseteil 21, die Abtriebseinheit 4 ein zweites Gehäuseteil 41 und die Zwischeneinheit 3 ein drittes Gehäuseteil 31 auf, in dem ihre Getriebebauteile 2.1 - 2.3, 3.1, 4.1 jeweils gelagert sind. Der Elektromotor 1 ist außerdem am ersten Gehäuseteil 21 gelagert. Die Gehäuseteile 21, 31, 41 fügen sich beim Adaptieren bevorzugt unmittelbar aneinander, so dass sie die Getriebebauteile 2.1 - 2.3, 3.1, 4.1 vor Schmutz und Flüssigkeiten schützen.

Im vorliegenden Ausführungsbeispiel ist als Komponente 5 ein Hebel vorgesehen, an den eine Heckklappe oder eine Fahrzeugtür anordbar ist. Im Folgenden werden die Begriffe Komponente 5 und Hebel synonym verwenedet. Der Verstellantrieb 6 eignet sich aber auch für das Verstellen von Sitzen, Schiebedächern oder ähnlichen Verstelleinheiten, die gleichzeitig manuell bedienbar sind.

In diesem Ausführungsbeispiel ist die zweite Abtriebswelle 45 zum Antrieb der Komponente 5 vorgesehen.

Um den Verstellantrieb 6 gegen Überlast zu schützen, umfasst der Verstellantrieb 6 an seiner der Komponente 5 zugewandten Seite eine Rutschkupplung 60, die einen Innenring 601, der drehfest an der zweiten Abtriebswelle 45 angeordnet ist, einen Außenring 602, der hier durch der Hebel 5 gebildet ist, sowie ein zwischen dem Außenring 602 und dem Innenring 601 angeordnetes Kupplungsmittel 603 umfasst.

Da in dieser Ausführungsform der Außenring 602 durch den Hebel 5 gebildet ist, benötigt diese Ausführungsform zwar in axialer Richtung, also in einer parallel der ersten Abtriebswelle verlaufenden Richtung, keinen zusätzlichen Bauraum für die Rutschkupplung 60. Nachteilig an dieser Ausführungsform ist jedoch, dass die Rutschkupplung 60 für sehr große Lasten ausgelegt sein muss, da sie an der der Komponente 5 zugewandten Seite der Abtriebseinheit 4 angeordnet ist.

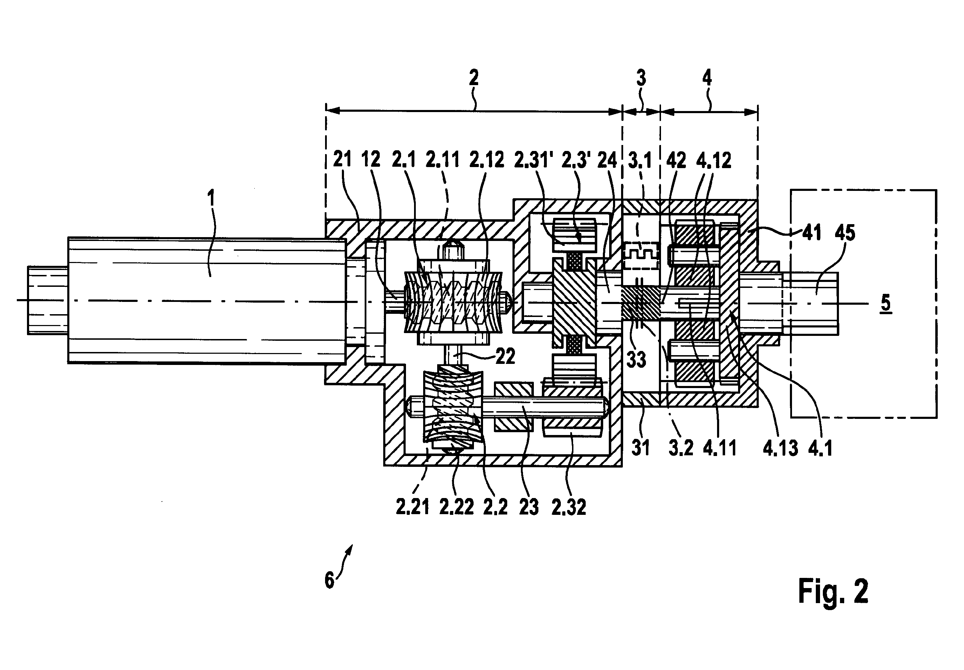

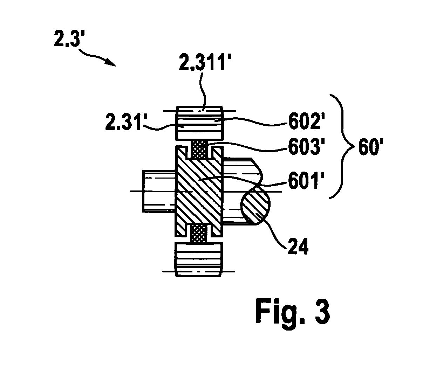

**Fig. 2** zeigt schematisch einen erfindungsgemäßen Verstellantrieb 6, der zum Antrieb der Komponente 5 vorgesehen ist. Der Verstellantrieb 6 unterscheidet sich von dem der **Fig. 1** durch das Stirnradgetriebe 2.3', welches die erste Getriebestufe der hier dargestellten Antriebseinheit 2 ist. Denn das Stirnradgetriebe 2.3' weist ein Getriebebauteil 2.31' auf, nämlich das Stirnrad, in das ein Überlastschutz 60' integriert ist (s. **Fig. 3**).

Dadurch ist der Überlastschutz 60' in die Antriebseinheit 2 ingetriert, ohne zusätzlichen Bauraum zu erfordern, und zwar weder in axialer noch in radialer Richtung.

Außerdem kann bei an die Antriebseinheit 2 adaptierter Abtriebseinheit 4 der in das Stirnradgetriebe 2.3' integrierte Überlastschutz 60' im Vergleich zu der Rutschkupplung 60 der **Fig. 1** kleiner ausgelegt sein, da die Untersetzung der Abtriebseinheit 4 nutzbar ist. In diesem Fall ist der in das Stirnrad 2.31' integrierte Überlastschutz 60' an der der Komponente 5 abgewandten Seite der Abtriebseinheit 4 angeordnet.

Die Komponente 5 ist somit entweder unmittelbar an die erste Abtriebswelle 24 der Antriebseinheit 2, oder an die zweite Abtriebswelle 45 der Abtriebseinheit 4 anordbar.

**Fig. 3** zeigt das Stirnrad 2.31' des erfindungsgemäßen Verstellantriebs 6 der **Fig. 2** in einer vergrößerten Ansicht. Das Stirnrad 2.31' weist einen ersten Teil 601' auf, der hier als Innenring ausgebildet ist, und der drehfest an der ersten Abtriebswelle 24 angeordnet ist. Die Begriffe erster Teil 601' und Innenring sind im Rahmen dieser Ausführungsform synonym verwendbar. Weiterhin weist es einen zweiten Teil 602' mit einer Verzahnung 2.311' auf, die hier als Außenring ausgebildet ist. Die Begriffe zweiter Teil 602' und Außenring sind im Rahmen dieser Ausführungsform synonym verwendbar. Der Innenring 601' ist sowohl einstückig als auch separat mit der ersten Abtriebswelle 24 fertigbar. Außerdem weist das Stirnrad 2.31' ein Kupplungsmittel 603' auf, welches zwischen dem Innenring 601' und dem Außenring 602' angeordnet ist, und welches zum Kuppeln des Außenrings 602' an den Innenring 601' vorgesehen ist. Das Kupplungsmittel 603' ist hier als Torsionsring ausgebildet.

Der Überlastschutz 60' ist durch den Innenring 601', den Außenring 602' sowie das Kupplungsmittel 603' gebildet und in das Stirnrad 2.31' integriert.

Die Verzahnung 2.311' ist die Außenverzahnung des Stirnrades 2.31', die mit dem an der Zwischenwelle 23 angeordneten Zahnrad 2.32 des Stirnradgetriebes 2.3' in Eingriff ist (s. **Fig. 2**).

## Patentansprüche

1. Verstellantrieb (6) für eine sowohl mittels des Verstellantriebs (6) als auch manuell bedienbare Komponente (5), insbesondere eines Kraftfahrzeugs, wobei der Verstellantrieb (6) einen Antrieb (1) sowie eine Antriebseinheit (2) umfasst, wobei der Antrieb (1) zum Antreiben der Antriebseinheit (2), und die Antriebseinheit (2) zum Untersetzen einer Drehzahl des Antriebs (1) vorgesehen ist, wobei
die Antriebseinheit (2) ein Getriebebauteil (2.3') umfasst, in das ein Überlastschutz (60') integriert ist, **dadurch gekennzeichnet, dass** die Antriebseinheit (2) zumindest eine erste als Stirnradgetriebe ausgebildete Getriebestufe (2.3') mit einer ersten Abtriebswelle (24) umfasst, wobei der Überlastschutz (60') an der ersten Abtriebswelle (24) angeordnet und in ein Stirnrad integriert ist, und das Getriebebauteil (2.31') als das Stirnrad ausgebildet ist und einen als Innenring ausgebildeten ersten Teil (601') aufweist, der drehfest an der ersten Abtriebswelle (24) angeordnet ist, sowie einen als Außenring ausgebildeten zweiten Teil (602') mit einer Außenverzahnung (2.311') aufweist, und das Getriebebauteil (2.31') weiterhin ein als ein Toleranzring, oder ein Torsionsring, oder eine Feder ausgebildetes Kupplungsmittel (603') umfasst, das zwischen dem ersten Teil (601') und dem zweiten Teil (602') angeordnet und zum Kuppeln des zweiten Teils (602') an das erste Teil (601') vorgesehen ist.

2. Verstellantrieb nach einem der vorherigen Ansprüche, **dadurch gekennzeichnet, dass** der Überlastschutz (60') zur Aufnahme von radialen Kräften vorgesehen ist.

3. Verstellantrieb (6) nach einem der vorherigen Ansprüche, **dadurch gekennzeichnet, dass** er eine Abtriebseinheit (4) umfasst, die vorgesehen ist, um ein Abtriebsdrehmoment der Antriebseinheit (4) zu untersetzen.

4. Verstellantrieb (6) nach einem der vorherigen Ansprüche, **dadurch gekennzeichnet, dass** die Abtriebseineheit (4) ein Planetengetriebe (4.1) ist.

5. Verstellantrieb (6) nach einem der vorherigen Ansprüche, **dadurch gekennzeichnet, dass** das Planetengetriebe (4.1) ein Sonnenrad (4.11) umfasst, welches an die erste Abtriebswelle (24) der Antriebseinheit (2) adaptierbar ist.

6. Verstellantrieb (6) nach einem der vorherigen Ansprüche, **dadurch gekennzeichnet, dass** eine die Antriebseinheit (2) antreibende Antriebswelle (12), die erste Abtriebswelle (24) der Antriebseinheit (2), sowie eine zweite Abtriebswelle (45) der Abtriebseinheit (4), die zum Antrieb der Komponente (5) vorgesehen ist, koaxial angeordnet sind.

7. Verstellantrieb (6) nach einem der vorherigen Ansprüche, **dadurch gekennzeichnet, dass** zwischen dem Antrieb (1) und der ersten Getriebestufe (2.3') ein erstes Schneckengetriebe (2.1), sowie ein zweites Schneckengetriebe (2.2) angeordnet sind.

## Claims

1. Adjustment drive (6) for a component (5) which can be operated both by means of the adjustment drive (6) and also manually, in particular of a motor vehicle, wherein the adjustment drive (6) comprises a drive (1) and a drive input unit (2), wherein the drive (1) is provided for driving the drive input unit (2) and the drive input unit (2) is provided for effecting a reduction of a rotational speed of the drive (1), wherein
the drive input unit (2) comprises a gearing component (2.3') into which an overload protector (60') is integrated, **characterized in that** the drive input unit (2) comprises at least one first gearing stage (2.3'), formed as a spur gear mechanism, with a first drive output shaft (24), wherein the overload protector (60') is arranged on the first drive output shaft (24) and integrated into a spur gear, and the gearing component (2.31') is formed as the spur gear and has a first part (601'), which first part is formed as an inner ring and is arranged rotationally conjointly on the first drive output shaft (24), and a second part (602'), which second part is formed as an outer ring and has an external toothing (2.311'), and the gearing component (2.31') furthermore comprises a coupling means (603'), formed as a tolerance ring or a torsion ring or a spring, which is arranged between the first part (601') and the second part (602') and which is provided for coupling the second part (602') to the first part (601').

2. Adjustment drive according to the preceding claim, **characterized in that** the overload protector (60') is provided for absorbing radial forces.

3. Adjustment drive (6) according to one of the preceding claims, **characterized in that** it comprises a drive output unit (4) which is provided for effecting a reduction of a drive output torque of the drive input unit (2).

4. Adjustment drive (6) according to one of the preceding claims, **characterized in that** the drive output unit (4) is a planetary gear set (4.1).

5. Adjustment drive (6) according to one of the preceding claims, **characterized in that** the planetary gear set (4.1) comprises a sun gear (4.11) which can be adapted to the first drive output shaft (24) of the drive input unit (2).

6. Adjustment drive (6) according to one of the preceding claims, **characterized in that** a drive input shaft (12) which drives the drive input unit (2), the first drive output shaft (24) of the drive input unit (2), and a second drive output shaft (45) of the drive output unit (4), which is provided for driving the component (5), are arranged coaxially.

7. Adjustment drive (6) according to one of the preceding claims, **characterized in that** a first worm gearing (2.1) and a second worm gearing (2.2) are arranged between the drive (1) and the first gearing stage (2.3').

## Revendications

1. Entraînement de réglage (6) pour un composant (5), en particulier d'un véhicule automobile, pouvant être commandé aussi bien au moyen de l'entraînement de réglage (6) que manuellement, dans lequel l'entraînement de réglage (6) comprend un entraînement (1) ainsi qu'une unité d'entraînement (2), dans lequel l'entraînement (1) est prévu pour l'entraînement de l'unité d'entraînement (2) et l'unité d'entraînement (2) est prévue pour réduire une vitesse de rotation de l'entraînement (1), dans lequel l'unité d'entraînement (2) comprend un composant de transmission (2.3'), dans lequel une protection de surcharge (60') est intégrée, **caractérisé en ce que** l'unité d'entraînement (2) comprend au moins un premier étage de transmission (2.3') réalisé sous forme de roue droite avec un premier arbre de sortie (24), dans lequel la protection de surcharge (60') est disposée sur le premier arbre de sortie (24) et est intégrée dans une roue droite, et le composant de transmission (2.31') est réalisé sous la forme de la roue droite et présente une première partie (601') réalisée sous forme de bague intérieure, qui est montée de façon solidaire en rotation sur le premier arbre de sortie (24), et présente aussi une deuxième partie (602') réalisée sous forme de bague extérieure avec une denture extérieure (2.311'), et le composant de transmission (2.31') comprend en outre un moyen de couplage (603') réalisé sous la forme d'une bague de tolérance, ou d'une bague de torsion, ou d'un ressort, qui est disposé entre la première partie (601') et la deuxième partie (602') et qui est prévu pour le couplage de la deuxième partie (602') à la première partie (601').

2. Entraînement de réglage selon la revendication précédente, **caractérisé en ce que** la protection de surcharge (60') est prévue pour la reprise de forces radiales.

3. Entraînement de réglage (6) selon l'une quelconque des revendications précédentes, **caractérisé en ce qu'**il comprend une unité de sortie (4), qui est prévue pour réduire un couple de rotation de sortie de l'unité d'entraînement (2).

4. Entraînement de réglage (6) selon l'une quelconque des revendications précédentes, **caractérisé en ce que** l'unité de sortie (4) est un engrenage planétaire (4.1).

5. Entraînement de réglage (6) selon l'une quelconque des revendications précédentes, **caractérisé en ce que** l'engrenage planétaire (4.1) comprend une roue solaire (4.11), qui peut être adaptée au premier arbre de sortie (24) de l'unité d'entraînement (2).

6. Entraînement de réglage (6) selon l'une quelconque des revendications précédentes, **caractérisé en ce qu'**un arbre d'entraînement (12) entraînant l'unité d'entraînement (2), le premier arbre de sortie (24) de l'unité d'entraînement (2) ainsi qu'un deuxième arbre de sortie (45) de l'unité de sortie (4), qui est prévu pour l'entraînement du composant (5), sont disposés de façon coaxiale.

7. Entraînement de réglage (6) selon l'une quelconque des revendications précédentes, **caractérisé en ce qu'**un premier engrenage à vis sans fin (2.1) ainsi qu'un deuxième engrenage à vis sans fin (2.2) sont disposés entre l'entraînement (1) et le premier étage de transmission (2.3').
